# EUROPEAN PATENT APPLICATION

(11) **EP 0 856 534 A1**
(43) Date of publication of application: **05.08.1998**
(21) Application number: 98101484.8
(22) Date of filing: 28.01.1998
(51) Int. Cl.: C08G 18/08, C08G 18/10

(54) **Moisture curing clear and color pigmented polyurethane coatings**

(30) Priority: 30.01.1997 US 790972
(71) Applicant: AIR PRODUCTS AND CHEMICALS, INC., Allentown, PA 18195-1501 (US)
(72) Inventor: Bassner, Sherri Lynn, Bethlehem, PA 18018 (US); Burdenski, Robert Eugene, Kempton, PA 19529 (US); Santosusso, Thomas Michael, Macungie, PA 18062 (US)
(74) Representative: Kador & Partner

(57) **Abstract**

A moisture curing coating composition comprising in an organic solvent a polyurethane prepolymer, optionally a pigment, and a desiccant characterized in that polyphosphoric acid is the desiccant.

## Description

### TECHNICAL FIELD OF THE INVENTION

The present invention relates to polyurethane coating compositions containing a polyurethane prepolymer which are cured by moisture.

### BACKGROUND OF THE INVENTION

There are many commercial and industrial protective and/or decorative coatings for use on walls, machines, and other such entities requiring protective coatings. Polyurethane coatings are known in the industry as one of the toughest coatings available. However, due to certain problems, there is a reluctance to use such coatings.

The industry uses either of two systems, the single polyisocyanate component, moisture curing type and the two package system consisting of a polyol component and a separate isocyanate component, the polyol being chosen to chemically combine with a suitable polyisocyanate. In addition, the polyol portion is pigmented to achieve the desired color, opacity, etc.

One problem with single component systems is that the color pigments contain absorbed moisture on their surfaces that cause the polyurethane formula to gel within a few days, becoming hard and unfit for a commercial use. Additionally, the reaction of the isocyanate with water produces carbon dioxide gas which can cause dangerous pressure to build up during storage of the coating in sealed containers.

Two package, or component, system has the advantage of overcoming the problems of combining color pigments and isocyanate polymers when creating a single component polyurethane. In the two component system, the pigmented polyol portion and the polyisocyanate are supplied in separate containers to the ultimate user or consumer. The consumer mixes the two portions in accordance with the ratio specified by the manufacturer just prior to use. However, this admixture has a limited life and must be used up within a relatively short period of time or it will harden and become unusable. This approach is not only cumbersome but expensive in that it results in a quantity of hardened and wasted material if the entire admixture is not used up. There is also risk that the pigmented polyol portion and the polyisocyanate portion will not be mixed in the correct ratio causing serious damage to the performance of the resulting polyurethane coating.

In addition, atmospheric moisture is a significant factor in using the two package method in that water also cures isocyanates. On a hot humid day a large portion of the polyisocyanate is cured by atmospheric moisture leaving a portion of the polyol with nothing with which to crosslink itself, resulting in a coating less desirable than if the polyol was completely crosslinked. Likewise, on a cold, dry day more of the polyol will crosslink with the polyisocyanate. It is apparent that the two package polyurethane coating method will produce a quality of coating dependent upon atmospheric conditions which are almost always impossible to control.

Moisture curing polyurethane coatings can be made in a single package method eliminating all the above-mentioned problems of the two package types. There are many polyisocyanates that react with atmospheric water at room temperature and form useful films that are used in a limited form as moisture curing polyurethane coatings. This type of coating is one of the finest coatings available that can be produced without the use of heat or other external sources of energy being applied. They are very useful for objects that cannot be heated.

However, making such a single package system is also cumbersome and expensive. The existing methods for preparing color pigmented polyurethane coatings in a single package require careful drying of all the components such as the color pigments, for the reasons noted above; this often requires time consuming procedures and the use of expensive equipment; or, they require the sacrifice of some of the critical properties of the final coating film, such as loss of gloss, high risk of toxicity during application, lack of film strength, etc.

Materials, i.e., desiccants, used to dry and passivate pigments in single package, moisture curing color pigmented polyurethane coatings include:
- molecular sieves which cause the coatings to lose their gloss and to sometimes gel due to the alkalinity of some of the molecular sieves
- monofunctional isocyanates, such as p-toluenesulfonyl isocyanate (PTSI), which are expensive and also hazardous due to their high volatile nature
- diisocyanates, such as isophorone diisocyanate (IPDI) and methylene di(phenyl isocyanate) derivatives (MDI), which require an excess and can generate a toxicity problem
- alkyl ortho-esters, such as ethylorthoformate, which result in the formation of alcohols that degrade the final coating film

The majority of the moisture curing polyurethane manufacturers, for the above reasons, manufacture moisture curing polyurethanes in a clear form or pigmented with hydrophobically treated metallic pigments like aluminum. Such metallic pigments contain little or no moisture and hence the moisture problems inherit in color pigments do not exist; the color pigments have enough absorbed moisture in them to render them unfit for use in moisture curing polyurethane coatings.

U.S. 4,304,706 discloses a process for making color pigmented moisture curing polyurethanes by preparing a slurry of specified color pigments, solvents, and additives to which is added a specified quantity of a chosen monomeric diisocyanate. A polyol (or other suitable hydrogen donor) is added to the slurry and the monomeric diisocyanate. To the aforesaid mixture, called a color pigment dispersion, are then added pigments followed by isocyanate prepolymers. The completed admixture results in a stable colored moisture curing (air drying) polyurethane for use as a protective and decorative coating.

### SUMMARY OF THE INVENTION

The present invention is directed to a moisture curing polyurethane coating composition comprising a polyurethane prepolymer (also called an isocyanate or polyisocyanate prepolymer), optionally in an organic solvent, to which polyphosphoric acid (PPA) has been added as a stabilizer/desiccant. The coating composition may be a clear coating or a color pigmented coating.

Another embodiment of the invention comprises stabilizing a moisture-curing polyurethane coating composition containing an isocyanate-terminated prepolymer, optionally in an-organic solvent, by adding a stabilizingly effective amount of PPA.

As yet another embodiment of the invention there is provided a substrate coated with a polyurethane coating deposited from a moisture curing clear or color coating composition described above.

The addition of PPA to the coating composition affords the following advantages:
- PPA is both an effective stabilizer against thermal degradation for the isocyanate-containing composition and is a pigment desiccant.
- PPA also provides for improved corrosion resistance and adhesion to metal substrates, including rusty steel.

### DETAILED DESCRIPTION OF THE INVENTION

A moisture curing coating composition basically comprises a polyisocyanate component and an organic solvent. Suitable polyisocyanate materials may be any of those isocyanate-terminated prepolymers well known in the art for making moisture curing polyurethane coatings. The prepolymers typically comprise a partially prereacted mixture of a polyisocyanate and a polyether or polyester polyol. Many organic polyisocyanates may be used in making the prepolymers such as, for example, hexamethylene diisocyanate, phenylene diisocyanate, toluene diisocyanate (TDI) and 4,4'-diphenylmethane diisocyanate ("MDI"). Isophorone diisocyanate (IPDI) is especially suitable for making prepolymers for topcoats and trimethylhexamethylene diisocyanate (TMDI) is excellent for flexible coatings and for exterior use. TDI is low priced but exhibits poor exterior characteristics. MDI has poor exterior durability but forms a tough chemical resistant coating.

Illustrative of suitable polyols for use in making the prepolymers are the polyalkylene polyether and polyester polyols. The polyalkylene polyether polyols include the poly(alkylene oxide) polymers such as poly(ethylene oxide) and poly(propylene oxide) polymers and copolymers with terminal hydroxyl groups derived from a polyhydric compound, including diols and triols; for example, among others, ethylene glycol, propylene glycol, 1,3-butane diol, 1,4-butane diol, 1,6-hexane diol, neopentyl glycol, diethylene glycol, dipropylene glycol, pentaerythritol, glycerol, diglycerol, trimethylol propane and like low molecular weight polyols.

Obviously a single high molecular weight polyether polyol may be used. Also, mixtures of high molecular weight polyether polyols such as mixtures of difunctional and trifunctional materials and/or different molecular weight or different chemical composition materials may be used.

Useful polyester polyols include those produced by reading a dicarboxylic acid with an excess of a diol, for example, adipic acid with ethylene glycol or butane diol, or reacting a lactone with an excess of a diol such as caprolactone with propylene glycol.

In addition to or in place of some of the polyols, polyamines such as ethylenediamine may be used.

The prepolymers should have an NCO content of 1 to 30 wt%, preferably 6 to 16 wt%. Suitable polyisocyanate prepolymers for clear and color pigmented coatings are both well known in the art and commercially available, such as AIRTHANE® PCG-475 and AIRTHANE ASN-540 prepolymers (Air Products and Chemicals, Inc.), and Desmodur E-23 prepolymer (Bayer Corp.).

For making a color pigmented moisture curing polyurethane coating composition any of the pigments well known in the art obviously may be used except possibly for those pigments, such as iron oxide, that have a high reduction potential because PPA may reduce them. Suitable pigments for color pigmented coatings are commercially available from many sources, such as Hüls, Inc. and Bayer, Inc.

PPA as used in the invention is a well known chemical material and comprises condensation products of orthophosphoric acid above 400°C, to which they revert on dilution in water; and includes pyrophosphoric acid. PPA is also called phospholeum and tetraphosphoric acid. PPA may also be prepared by heating orthophosphoric acid with sufficient phosphoric anhydride. For practicing the invention commercial PPA may used or PPA may be generated *in situ* by using phosphorus pentoxide (P₂O₅) which will react with adventitious moisture.

As with the other components the organic solvents suitable for use in the present invention are any of those well known in the moisture curing clear coating and color pigment coating art. Illustrative of suitable solvents are methyl amyl ketone, butyl acetate, toluene and mixtures thereof.

Other additives which are often typically used in clear coat and color pigmented compositions include, for example, plasticizers, surfactants, pigment dispersants, flow and leveling aids, defoamers, antioxidants and light stabilizers.

A typical clear coat composition according to an invention would comprise 10 to 90 wt% polyisocyanate prepolymer and 0.1 to 10 wt%, preferably 2 to 6 wt%, PPA, based on prepolymer, optionally in a suitable solvent. Typical moisture curing pigment coating compositions would comprise 5 to 90 wt% polyisocyanate prepolymer, 1 to 70 wt% pigment and 0.1 to 10 wt%, preferably 2 to 6 wt%, PPA, based on prepolymer, optionally in a suitable solvent.

In practicing the invention the PPA is merely added in the paint-making process or can be added just as easily to the prepolymer at or during its manufacture. When used in the paint-making process for pigments that are not ground, e.g. zinc dust, the prepolymer is first heated or diluted in solvent to reduce viscosity and the PPA is added under low shear and mixed well. The pigment is then added slowly under moderate shear and allowed to mix well. For pigments that are ground to reduce particle size, e.g. titanium dioxide, the PPA can be added either as above or under high shear after the pigment has been dispersed. For a clear coating application, the PPA is simply mixed into the prepolymer, the prepolymer viscosity being reduced by heating or dilution in solvent as necessary.

Clear and pigmented coatings prepared according to the invention show good shelf stability and panels coated with the compositions have shown corrosion resistance equal to or better than isocyanate-dried systems.

Heat is not needed to drive the drying process as with isocyanate desiccants. The PPA improves the corrosion resistance-and enhances the shelf stability of the prepolymer. While PPA must be handled with care since it is essentially a very strong acid, its use does not present the toxicity concerns or exposure potential of isocyanate desiccants.

The coating compositions according to the invention may be coated on various primed or unprimed substrates including steel, aluminum, concrete and wood.

In the following examples of moisture cure top coats, the following components were used:
Davidson Syloid 120 zeolite-based molecular sieve
DuPont TiPure R960 titanium dioxide
Hüls Nuosperse N657 pigment dispersant
King Dislon NS-30 polyacrylate/polyethylene blend
King Kkat XC-4205 metal salt catalyst
Airthane® ASN-540M IPDI/neopentyl adipate prepolymer
Tego Chemie Airex 980 silicone-based defoamer
PTSI -- para-toluenesulfonyl isocyanate
Metacure® 120 metal salt catalyst

### EXAMPLE 1

This Example demonstrates a standard topcoat moisture curing polyurethane composition.

| STANDARD TOPCOAT WITH PTSI | |
|---|---|
| **INGREDIENT** | **INPUT Wt kg (lb)** |
| Add to the mix tank and mix well: | |
| Davidson Syloid 120 | 18.14 (40) |
| DuPont TiPure R960 | 112.95 (249) |
| Hüls Nuosperse N657 | 3.63 (8) |
| King Dislon NS-30 | 3.63 (8) |
| Butyl Acetate | 88.45 (195) |
| King Kkat XC-4205 | 2.27 (5) |
| Airthane ASN-540M | 80.02 (176.4) |
| Tego Chemie Airex 980 | 4.54 (10) |

| Add to the mix tank and mix well: | |
|---|---|
| PTSI | 1.36 (3) |

| Grind to a Hegman 7; allow to digest 20 minutes; Then letdown: | |
|---|---|
| Airthane ASN-540M | 190.15 (419.2) |

### EXAMPLE 2

This Example demonstrates a topcoat moisture curable polyurethane coating composition containing PPA.

| STANDARD TOPCOAT WITH PPA | |
|---|---|
| **INGREDIENT** | **INPUT Wt kg (lb)** |
| Premix: | |
| Poly(phosphoric acid) | 1.36 (3) |
| Butyl Acetate | 72.58 (160) |

| Add the premix and the following items to the mix tank; mix well: | |
|---|---|
| Davidson Syloid 120 | 18.14 (40) |
| DuPont TiPure R960 | 112.04 (247) |
| Hüls Nuosperse N657 | 3.63 (8) |
| King Dislon NS-30 | 3.63 (8) |
| Tego Chemie Airex 980 | 4.54 (10) |
| Airthane ASN-540M | 80.02 (176.4) |

| Grind to a Hegman 7; allow to digest 20 minutes, covered; Then letdown: | |
|---|---|
| King Kkat XC-4205 | 14.88 (32.8) |
| Metacure 120 | 0.36 (0.8) |
| Airthane ASN-540M | 190.15 (419.2) |

### EXAMPLE 3

Table 1 presents the comparative data for the coating compositions of Examples 1 and 2. It can be seen from the data that the PPA-containing top coat composition of Example 2 performed as well or better than the PTSI-containing composition of Example 1. Example 2 was superior with regard to gloss loss and gloss retention under exposure of UV-stabilized formulations.

**Table 1**

| PROPERTY | EXAMPLE 1 | EXAMPLE 2 |
|---|---|---|
| Stability at 49°C (120°F) | >2 weeks | >2 weeks |
| Dry to touch | 2 hr | 2 hr |

| Chemical Resistance (24 hr spot test): | | |
|---|---|---|
| 5% HCl | slightly softened | no effect |
| 5% HNO3 | slightly softened | slightly softened |
| 5% NaOH | no effect | no effect |
| methyl ethyl ketone | softened | softened |

| Humidity Resistance (1000 hr): | | |
|---|---|---|
| Rust/Blistering | none | none |
| Gloss Loss | severe | slight |

| QUV-B Exposure of UV-stabilized formulations: | | |
|---|---|---|
| 1000 hr | 69% gloss retention | 87% gloss retention |
| 2000 hr | 13% gloss retention | 43% gloss retention |

### STATEMENT OF INDUSTRIAL APPLICATION

The present invention provides for moisture curing clear and color pigment coating compositions containing a polyurethane prepolymer and polyphosphoric acid as a stabilizer and pigment desiccant.

## Claims

1. In a moisture-curing polyurethane coating composition comprising a polyurethane prepolymer and a desiccant, optionally in an organic solvent, the improvement which comprises polyphosphoric acid as the desiccant.

2. The coating composition of Claim 1 in which the polyphosphoric acid is present at 0.1 to 10 wt%, based on prepolymer.

3. The coating composition of Claim 1 in which the polyphosphoric acid is present at 2 to 6 wt%, based on prepolymer.

4. In a moisture curing pigmented coating composition comprising a polyurethane prepolymer, a pigment, a desiccant, and optionally an organic solvent, the improvement which comprises polyphosphoric acid as the desiccant.

5. The coating composition of Claim 1 in which the polyphosphoric acid is present at 0.1 to 10 wt%, based on prepolymer.

6. The coating composition of Claim 1 in which the polyphosphoric acid is present at 2 to 6 wt%, based on prepolymer.

7. In a method for stabilizing a moisture-curing polyurethane coating composition comprising a polyurethane prepolymer, optionally in an organic solvent, the improvement which comprises adding 0.1 to 10 wt% polyphosphoric acid based on prepolymer.

8. The method of Claim 7 in which the coating composition is a clear coating.

9. The method of Claim 7 in which the coating composition is a color pigmented coating.
